# EUROPÄISCHE PATENTANMELDUNG

(11) **EP 0 673 802 A1**
(43) Veröffentlichungstag der Anmeldung: **27.09.1995**
(21) Anmeldenummer: 95103380.2
(22) Anmeldetag: 09.03.1995
(51) Int. Cl.: B60R 1/12, G01S 13/93, H01Q 1/32

(54) **Überwachungseinrichtung für die Fahrer- und/oder Beifahrerseite von Fahrzeugen, vorzugsweise von LKWs**

(30) Priorität: 26.03.1994 DE 4410620
(71) Anmelder: REITTER & SCHEFENACKER GmbH & Co. KG, D-73730 Esslingen (DE)
(72) Erfinder: Kübler, Walter, D-74420 Oberrot (DE); Kusuma, Djuanarto, D-96472 Rödental (DE)
(74) Vertreter: Jackisch-Kohl, Anna-Katharina

(57) **Zusammenfassung**

Die Überwachungseinrichtung hat einen Außenspiegel (4), der an der Fahrzeugtür oder an einem Halter (8) befestigt ist. Damit der von dem Außenspiegel (4) nicht erfaßte Bereich zumindest verkleinert wird, weist die Überwachungseinrichtung zur Erfassung eines vom Außenspiegel (4) nicht erfaßten Totwinkelbereiches mindestens einen Strahlungssensor (9) auf, der an eine Steuerung (13) angeschlossen ist. Über diese Steuerung (13) erhält die Anzeige (14) ein entsprechendes Signal, wodurch der Fahrer zuverlässig auf ein Hindernis aufmerksam gemacht wird.

## Beschreibung

Die Erfindung betrifft eine Überwachungseinrichtung für die Fahrer- und/oder Beifahrerseite von Fahrzeugen, vorzugsweise LKWs, nach dem Oberbegriff des Anspruches 1.

Die Beifahrerseiten von PKWs und LKWs werden durch Außenspiegel überwacht, die meist an der Fahrzeugtür oder einem Halter bei LKWs befestigt sind. Als Außenspiegel bei LKWs sind normale Fahrspiegel, Weitwinkelspiegel sowie sogenannte Rampen- oder Anfahrspiegel vorgesehen. Diese Außenspiegel erfassen zwar einen großen Bereich, jedoch verbleibt noch ein großer Totwinkelbereich, so daß die Gefahr besteht, daß sich in ihm befindliche Hindernisse bzw. Verkehrsteilnehmer vom Fahrer nicht bemerkt werden.

Der Erfindung liegt die Aufgabe zugrunde, eine Überwachungseinrichtung dieser Art so auszubilden, daß der von den Außenspiegeln nicht erfaßte Bereich zumindest verkleinert wird.

Diese Aufgabe wird bei einer Überwachungseinrichtung der gattungsbildenden Art erfindungsgemäß mit den kennzeichnenden Merkmalen des Anspruches 1 gelöst.

Bei der erfindungsgemäßen Ausbildung wird mit dem Strahlungssensor der Totwinkelbereich des Außenspiegels erfaßt. Befindet sich ein Hindernis oder Verkehrsteilnehmer, wie ein Radfahrer, Motorradfahrer, Fußgänger, in diesem Bereich, wird die vom Sensor ausgesandte Strahlung reflektiert. Über die Steuerung erhält die Anzeige ein entsprechendes Signal, so daß der Fahrer des Fahrzeuges zuverlässig auf das Hindernis aufmerksam gemacht wird.

Besonders vorteilhaft ist es, wenn der Strahlungssensor im Außenrückblickspiegel bzw. dessen Gehäuse vorgesehen ist. Dann kann ein zusätzliches Gehäuse sowie ein zusätzlicher Einbauplatz vermieden werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt
- Fig. 1: eine Vorderansicht auf einen Lkw mit einer erfindungsgemäßen Überwachungseinrichtung, die einen Sensor aufweist, mit dem ein mit seitlichem Abstand neben dem Lkw befindliches Motorrad erfaßt wird,
- Fig. 2: in schematischer Darstellung einen Teil des Lkws gemäß Fig. 1 in Draufsicht mit dem Erfassungsbereich der erfindungsgemäßen Überwachungseinrichtung,
- Fig. 3: einen Außenrückblickspiegel in Ansicht und teilweise in aufgerissener Darstellung, in dem die Überwachungseinrichtung untergebracht ist.

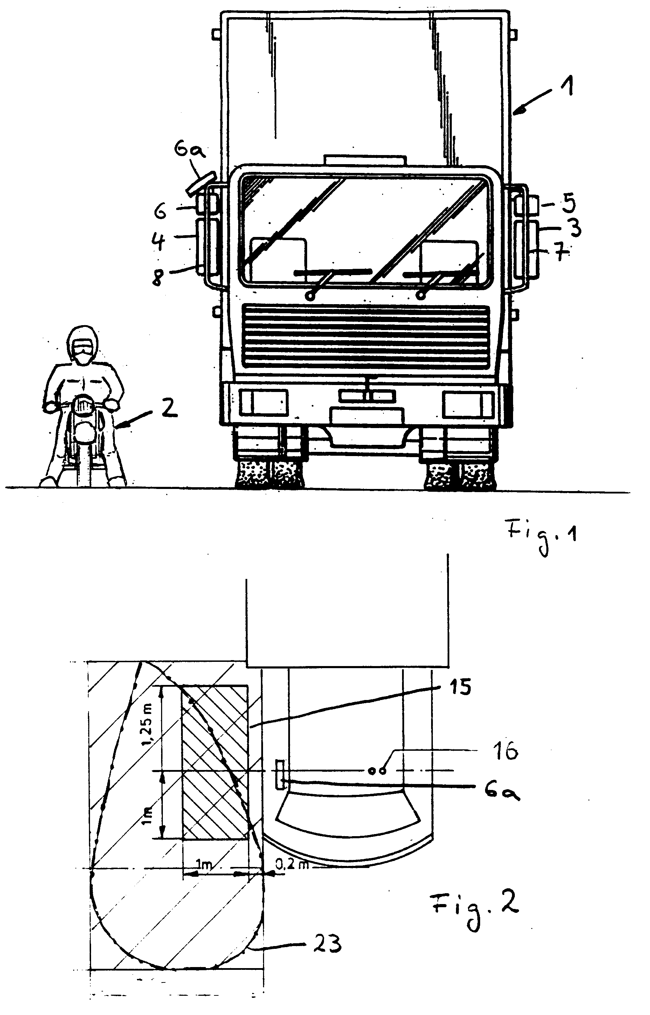

Fig. 1 zeigt einen LKW 1 sowie ein mit Abstand neben ihm befindliches Motorrad 2. An beiden Außenseiten des LKWs sind in dessen Frontbereich in an sich bekannter Weise jeweils ein Außenrückblickspiegel 3 und 4 sowie über ihnen angeordnete Weitwinkelaußenspiegel 5 und 6 vorgesehen. Diese Spiegel sind jeweils an einem Halterungsbügel 7 und 8 befestigt. Auf der dem Fahrer abgewandten Fahrzeugseite ist in bekannter Weise ein Rampen- oder Anfahrspiegel 6a befestigt, der im Bereich oberhalb des Weitwinkelspiegels 6 in einer Höhe von über 2 m, gemessen von der Fahrbahn, oberhalb der Fahrzeugtür angeordnet ist.

Mit den in Fahrtrichtung rechten Außenspiegeln 4, 6, 6a soll der vom Fahrer des LKW's nicht direkt einsehbare Bereich erfaßt werden. In Fig. 2 ist mit einer Schraffur das Mindestsichtfeld 15 angegeben, daß nach der EG-Richtlinie 71/127/EWG bzw. der ECE-Regelung 46 für den Anfahrspiegel 6a vorgeschrieben ist. Dieses Mindestsichtfeld erstreckt sich, gemessen von der Augenhöhe 16 des Fahrers, 1,25 m in Fahrtrichtung nach hinten und 1 m in Fahrtrichtung nach vorn. Das Mindestsichtfeld 15 hat außerdem einen seitlichen Abstand von 0,2 m von der in Fahrtrichtung rechten Fahrzeugseite und erstreckt sich 1 m senkrecht zur Fahrtrichtung nach außen.

Trotz der verschiedenen Spiegel besteht für den Fahrer ein verhältnismäßig großer Totwinkelbereich, den er mit den Außenspiegeln 4, 6, 6a nicht erfassen kann.

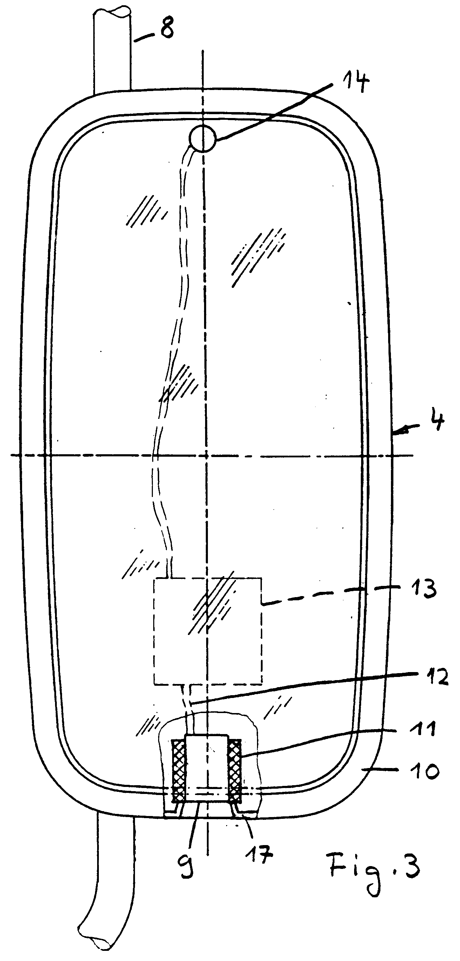

Um diesen Totwinkelbereich wenigstens zu verkleinern, ist eine Überwachungseinrichtung vorgesehen, die den vom Fahrer nicht einsehbaren Bereich an der rechten Fahrzeugseite erfaßt. Im dargestellten Ausführungsbeispiel ist die Überwachungseinrichtung im Außenrückblickspiegel 4 untergebracht. Sie weist einen Schallsensor 9 (Fig. 3) auf, der im Spiegelgehäuse 10 des Außenrückblickspiegels 4 angeordnet ist. Der Sensor 9 ist bevorzugt ein Ultraschallsensor, kann aber auch ein IR-Sensor sein. Der Sensor 9 ist in einer elastischen Lagerung 11, vorzugsweise einer Gummilagerung, angeordnet, mit der er im Gehäuse 10 befestigt ist und mit der die auftretenden Ultraschallschwingungen während der Fahrt entkoppelt werden können. Dadurch ist eine zuverlässige Arbeitsweise des Sensors 9 gewährleistet. Über elektrische Leitungen 12 ist der Sensor 9 mit einer elektrischen bzw. mit einer elektronischen Steuerung 13 verbunden, die ebenfalls im Spiegelgehäuse 10 angeordnet und an die eine optische Anzeige angeschlossen ist. Sie ist an einer dem Fahrer zugewandten Seite des Außenrückblickspiegels 4 vorgesehen. Im Ausführungsbeispiel befindet sich die Anzeige 14 auf dem Spiegelglas nahe dem oberen Rand des Außenrückblickspiegels 4. Die Anzeige 14 ist vorzugsweise eine Warnleuchte, die dann aufleuchtet, wenn der Schallsensor 9 ein Hindernis erfaßt.

Die Warnleuchte 14 kann auch im Fahrzeug im Sichtbereich des Fahrers, bsp. am Armaturenbrett, angeordnet sein. Die Anzeige 14 kann auch akustisch wirken und vorteilhaft innerhalb des LKWs 1 vorgesehen sein. Eine solche akustische Anzeige kann auch zusätzlich zur optischen Anzeige vorgesehen sein, so daß der Fahrer auf ein Hindernis im Erfassungsbereich des Schallsensors 9 aufmerksam gemacht wird. Die Steuerung 13 ist an die Fahrzeugbatterie angeschlossen. Da der Sensor 9 und dessen Ansteuerung sowie Wirkungsweise an sich bekannt sind, werden sie nicht näher erläutert. Trifft der vom Sensor 9 ausgesandte Ultraschall auf ein Hindernis, wird er an ihm reflektiert und gelangt zu einem Empfänger der Überwachungseinrichtung, der an sich bekannt und in den Zeichnungen nicht dargestellt ist. Er ist ebenfalls vorteilhaft im Außenrückblickspiegel 4 untergebracht und in bekannter Weise an die Steuerung 13 angeschlossen. Vom Empfänger erhält die Steuerung 13 ein entsprechendes Signal, wenn er einen am Hindernis reflektierten Strahl erfaßt. Die Steuerung 13 gibt dann ein Signal an die An-zeige(n) ab.

Der Sensor 9 ist am unteren Rand des Außenrückblickspiegels 4 in einer nach unten offenen Aufnahme 14 untergebracht, die sich nach unten vorzugsweise konisch erweitert (Fig. 3). Dadurch kann der Ultraschall einen entsprechend großen Bereich 23 (Fig.2) erfassen, da der Außenrückblickspiegel 4 einen entsprechend großen Bodenabstand hat. Wie Fig. 2 zeigt, ist der vom Sensor 9 erfaßte Bereich 23 wesentlich größer als das Sichtfeld 15. In Draufsicht gemäß Fig. 2 hat der Bereich 23 etwa Keulenform, deren Größe und Lage am Boden abhängig von der Abstrahlrichtung des Sensors ist. Diesr Bereich erstreckt sich etwa 1,5 m über die Höhe der Stoßstange des LKWs in Fahrtrichtung nach vorn und hat etwa in Stoßstangenhöhe seine größte Breite. Der Bereich 23 verjüngt sich von der Stoßstangenhöhe aus in Fahrtrichtung nach hinten und nach vorn. Von der Stoßstangenhöhe aus reicht der Bereich 23 etwa 2 bis 3 m in Fahrtrichtung nach hinten. An seiner größten Breite erstreckt sich der Bereich 23 etwa 2,5 m von der rechten Fahrzeuglängsseite senkrecht zur Fahrtrichtung.

Der Sensor 9 kann auch in den anderen Außenrückblickspiegeln 6, 6a untergebracht werden. Er läßt sich aber auch an den verschiedenen Spiegeln 4, 6, 6a vorsehen. In diesem Fall ist er in einem gesonderten Gehäuse untergebracht, das auch die Steuerung 13 und den Empfänger aufweist. Selbst am Halterungsbügel 8 läßt sich eine solche Überwachungseinrichtung befestigen.

Die Überwachungseinrichtung läßt sich auch an der linken Fahrzeugseite vorsehen, um den Totwinkelbereich für den Fahrer zu beseitigen. Die Überwachungseinrichtung kann für alle Arten von Fahrzeugen eingesetzt werden, bei denen das Problem des Totwinkelbereiches besteht.

## Patentansprüche

1. Überwachungseinrichtung für die Fahrer- und/oder Beifahrerseite von Fahrzeugen, vorzugsweise von LKWs, mit mindestens einem Außenspiegel,
dadurch gekennzeichnet, daß die Einrichtung zur Erfassung eines vom Außenspiegel (3 bis 6, 6a) nicht erfaßten Totwinkelbereiches mindestens einen Strahlungssensor (9) aufweist, der an eine Steuerung (13) angeschlossen ist, an die wenigstens eine Anzeige (14) angeschlossen ist.

2. Einrichtung nach Anspruch 1,
dadurch gekennzeichnet, daß der Strahlungssensor (9) ein Schallsensor ist.

3. Einrichtung nach Anspruch 2,
dadurch gekennzeichnet, daß der Schallsensor (9) ein Ultraschallsensor ist.

4. Einrichtung nach Anspruch 1,
dadurch gekennzeichnet, daß der Strahlungssensor (9) ein Infrarotsensor ist.

5. Einrichtung nach einem der Ansprüche 1 bis 4,
dadurch gekennzeichnet, daß die Anzeige (14) eine Leuchtanzeige ist.

6. Einrichtung nach einem der Ansprüche 1 bis 4,
dadurch gekennzeichnet, daß die Anzeige (14) eine akustische Anzeige ist.

7. Einrichtung nach einem der Ansprüche 1 bis 6,
dadurch gekennzeichnet, daß die Anzeige (14) im Gehäuse (10) des Außenspiegel (3 bis 6, 6a) untergebracht ist.

8. Einrichtung nach einem der Ansprüche 1 bis 6,
dadurch gekennzeichnet, daß der Strahlungssensor (9) an einer Halterung (7, 8) des Außenspiegels (3 bis 6, 6a) angeordnet ist.

9. Einrichtung nach einem der Ansprüche 1 bis 8,
dadurch gekennzeichnet, daß der Strahlungssensor (9) in einer elastischen Lagerung (11), vorzugsweise einer Gummilagerung, angeordnet ist.

10. Einrichtung nach einem der Ansprüche 7 bis 9,
dadurch gekennzeichnet, daß der Strahlungssensor (9) in einer Aufnahme (17) des Spiegelgehäuses (10) liegt, die sich in Strahlungsrichtung des Sensors erweitert.

11. Einrichtung nach Anspruch 10,
dadurch gekennzeichnet, daß die Aufnahme (17) am unteren Rand des Außenrückblickspiegelgehäuses (10) vorgesehen ist.

12. Einrichtung nach einem der Ansprüche 1 bis 11,
dadurch gekennzeichnet, daß das Sichtfeld (18) des Strahlungssensors (9) mindestens doppelt so groß ist wie das Sichtfeld (15) des Anfahrspiegels (6a).
